# EUROPEAN PATENT SPECIFICATION

(11) **EP 0 748 553 B1**
(45) Date of publication and mention of the grant of the patent: **20.05.1998**
(21) Application number: 95909898.9
(22) Date of filing: 02.03.1995
(51) Int. Cl.: H04M 1/66, H04M 1/27

(54) **TELEPHONE DIALLING MONITORING AND ROUTE SELECTING APPARATUS**
TELEFONWAHLÜBERWACHUNG UND ROUTENAUSWAHLVORRICHTUNG
APPAREIL DE CONTROLE DE COMPOSITION DE NUMEROS ET DE SELECTION D'ACHEMINEMENT POUR TELEPHONE

(30) Priority: 02.03.1994 GB 9404010
(43) Date of publication of application: 18.12.1996
(73) Proprietor: OPT-TEL LIMITED, Gerrards Cross Buckinghamshire SL9 8ES (GB)
(72) Inventor: BADII-AZANDAHI, Sahba, Swindow Wiltshire SN5 6EH (GB)
(74) Representative: Haley, Stephen
(86) International application number: GB9500453
(87) International publication number: WO9524091

(56) References cited:
- GB-A- 2 202 410
- GB-A- 2 218 595
- GB-A- 2 222 350
- US-A- 4 893 335
- US-A- 5 086 456

## Description

This invention relates to a telephone dialling monitoring apparatus and, in particular, to an apparatus for monitoring telephone numbers dialled by a user and outputting a route selecting signal dependent upon the dialled number.

In recent years, with the increase in choice of telephone services, particularly long distance carriers, provided for consumers, there has arisen a need for consumers to be able to determine quickly the routes available for any particular call and the cost associated with that route, so that a cost effective choice of route and service provider can be made.

A number of large scale automatic systems have been provided which monitor a user's calls, store data relating to call charges on various service and route providers, and output the dialled number to the cheapest route provider. Such systems have, however, been of little interest to domestic subscribers, as they have been bulky devices requiring external power supply and expert installation. Typically, therefore, domestic subscribers have had to input a selected prefix in order to establish a particular route/service. GB-A-2222350 discloses a monitoring and selecting apparatus.

An object of the present invention is to provide a system which is simple to operate, can be driven by power supplied via a telephone line, and is of a compact size.

According to the present invention there is provided a telephone dialling monitoring and route selecting apparatus comprising; a first connector for connecting the apparatus, in use, to a telephone line; a second connector for connecting the apparatus, in use, to a telephone unit; telephone dialling monitoring means connected to both the first and second connectors, for monitoring dialling signals from the telephone unit, and outputting signals to the telephone line in accordance with the monitored dialling signal and data stored in the monitoring means; and characterised by:
means for separating AC and DC signals provided via the telephone line and directing the AC signal to the telephone unit until the presence of a digit being dialled is detected by the telephone dialling monitoring means (4) and a portion of the DC signal to the telephone unit and a further portion of the DC signal to the monitoring means in order to power the apparatus.

By drawing off some of the DC component of the line signal but allowing the AC component to be provided to the receiver, the monitoring means can be driven solely by power provided by the telephone line, with only some of the DC power being dissipated through the telephone unit. In addition this allows for a dialling tone to be provided to a user so that the user is unaware of the existence of the unit when the telephone unit is in use.

The signal separating means may be controllable, so that it can be de-activated under particular operating conditions, for example, when a call has been connected. A current sensing relay may be provided between the second connector and the monitoring means, the relay operating to connect the telephone unit directly to the telephone line, bypassing the monitoring means, when the receiver is on-hook, so that incoming telephone calls are directed directly to the telephone unit, and operating to connect the telephone unit to the monitoring means when the telephone unit is taken off-hook by a user. Alternatively, a bridge rectifier or similar rectifying means is provided between the first connector and the monitoring means.

One example of the present invention will now be described with reference to the accompanying drawings in which:
Fig. 1 is a circuit diagram of a basic circuit to illustrate the present invention;
Fig. 2 is a circuit diagram of a second example basic circuit according to the present invention; and
Figs. 3A to 3D are circuit diagrams of a more detailed circuit according to the present invention.

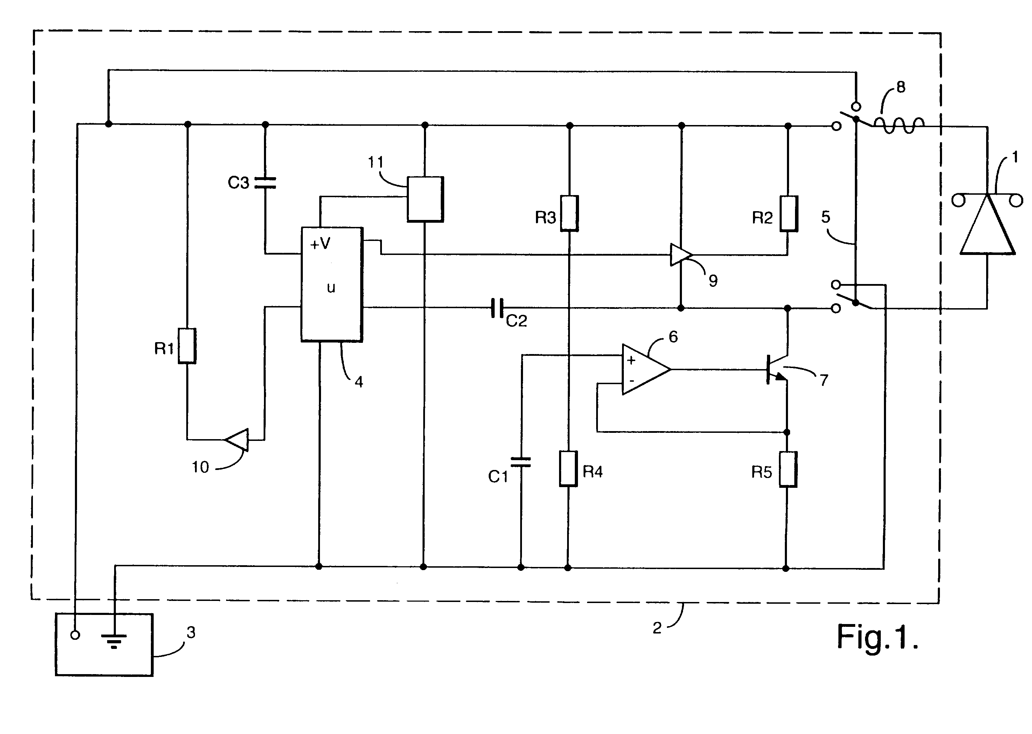

Referring to figure 1, a telephone unit 1, which may be a normal telephone handset, fax machine, etc., is connected to a monitoring unit 2. The monitoring unit 2 is, in turn, connected to a telephone line by a connector 3.

The monitoring unit 2 comprises microprocessor 4, a current sensitive relay 8, double pole change over relay 5, an operational amplifier 6, a transistor 7, capacitors C1 to C3, resistors R1 to R5, line voltage regulator 12, and amplifiers 9 and 10.

Resistor R1 is set to be of a value equal to that of the standard resistance for a device approved for connection to the telephone system, as specified by the telephone system provider. In the United Kingdom this may be 600 Ohms or a so-called complex impedance. Resistor R2 is also set to this value, so that when the telephone unit 1 is connected to the monitoring unit 2 by the relay 5, the telephone is connected to a resistance of a value equal to which it is connected when connected directly to the connector 3.

When the telephone unit 1 is on-hook, the relay 5 is switched to connect the telephone unit directly to the connector 3. When a user takes the telephone unit 1 off-hook the current sensitive relay 8 senses the off-hook condition and connects the telephone unit 1 to resistor R2, transistor 7 and microprocessor 4 via the relay 5.

If the user has taken the telephone unit 1 off-hook to answer a call, the user will still be able to listen to the incoming voice or data signal as AC and DC signals from the connector 3 are passed through to the telephone unit 1 in an unaltered form as will be described later.

If, however, the user has taken the telephone unit 1 off-hook to place a call, the user will hear the dialling tone generated by the telephone line, as this fed through to the telephone unit by the microprocessor 4 via the amplifier 9.

Once the microprocessor 4 detects the presence of a digit being dialled by a user via capacitor C2, it prevents passage of the dialling signal through to the telephone 1 by disabling the amplifier 9, and reads the dialling signal to determine the telephone number that the user wishes to communicate with. By using data stored in its memory, the microprocessor 4 calculates the most cost efficient route for the call and amends the dialling signal accordingly. The amended dialling signal is then output to the telephone line via the amplifier 10 and the connector 3.

The data held by the microprocessor 4 can be updated by connection (by a user or external contact) to a database to ensure the data relating to call costs up to date.

The monitoring unit 2 prevents the transmission of AC signals to or from the line from or to the telephone unit 1 by presenting a high AC impedance but low DC impedance through it. This is done by the arrangement of the operational amplifier 6, transistor 7, capacitor C1, and resistors R3, R4 and R5. The arrangement as shown prevents the flow of AC signals through the combination of resistor R2 and telephone unit 1 by preventing the passage of AC signals through the transistor 7. Because of the presence of the capacitor C1, however, the feedback characteristics of the operational amplifier 6 which allow DC signal flow through transistor 7 are altered for AC signals, which are prevented from flowing through the transistor 7. The values of resistors R3 and R4 are set so as to present a high impedance to the telephone line via the connector 3.

The microprocessor 4 and any components associated with it are powered from current drawn from the telephone line by the line voltage regulator 11, which draws the required current from the line without interfering with the impedance presented to the line by resistor R1.

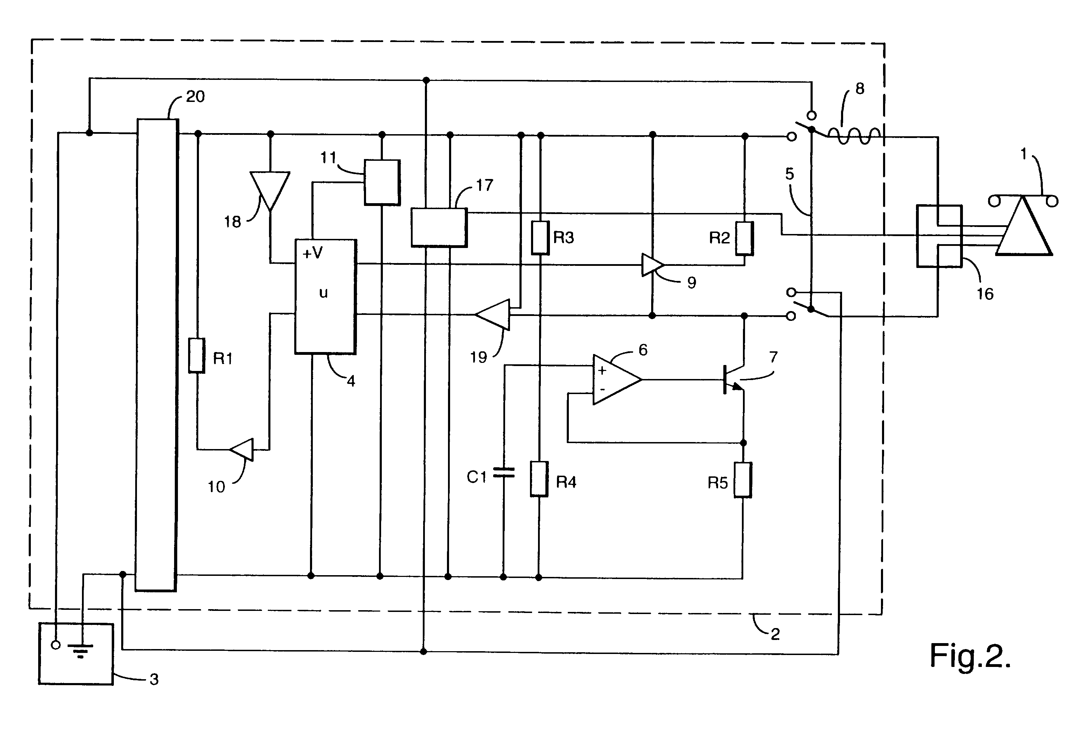

In the example of Fig. 2, a large number of components are equivalent to those in Fig. 1, and have been identically numbered. The second connector 16 in this example is adapted to connect to a three wire telephone apparatus, and an additional adapting unit 17 added in order to provide the correct signals to the telephone unit 1 to enable the telephone unit 1 to ring and provide a dial tone when necessary. In this example, the capacitors C2 and C3 of Fig. 1 have been replaced by amplifiers 19,18, which have an equivalent function but enable lower magnitude signals from the telephone unit 1 still to be registered by the monitoring means 4. In this example, a rectifying unit 20 has been added. Provision of rectifying unit 20 enables, with the provision of simple additional circuitry (not shown) the removal of relay 5 and hence the removal of the only apparatus component requiring mechanical movement during operation.

Additional circuitry (not shown) may also be provided in the circuitry of any of the above examples to maintain the telephone line current or voltage, so that, when a pulse dial telephone is used, the reduced current or voltage pulses that are generated are not passed out of the apparatus 2 and down the telephone line.

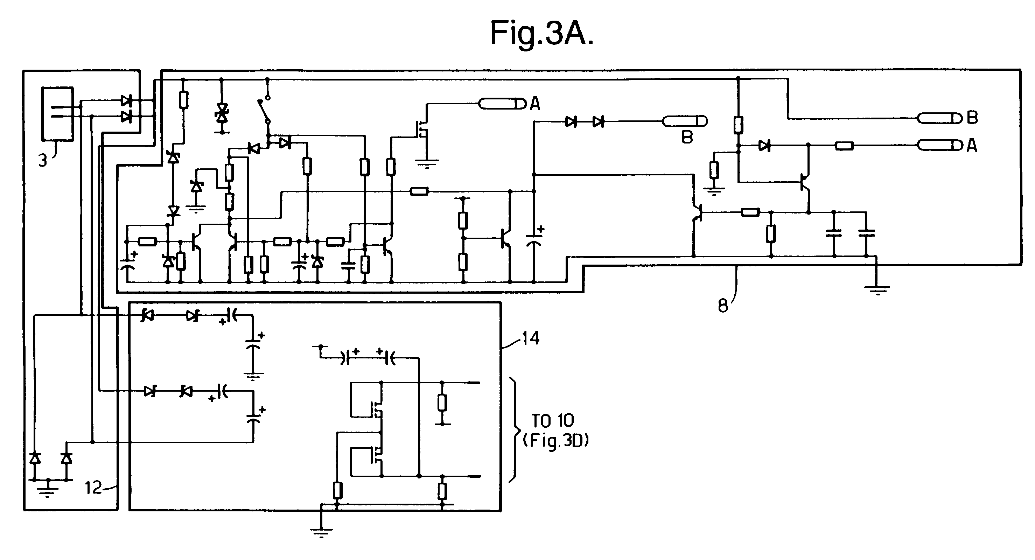

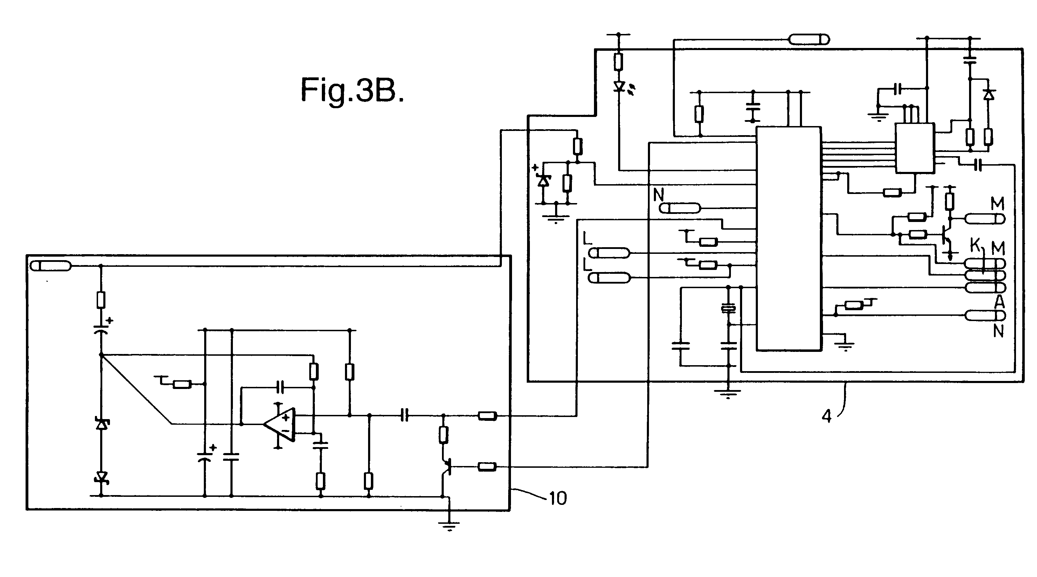

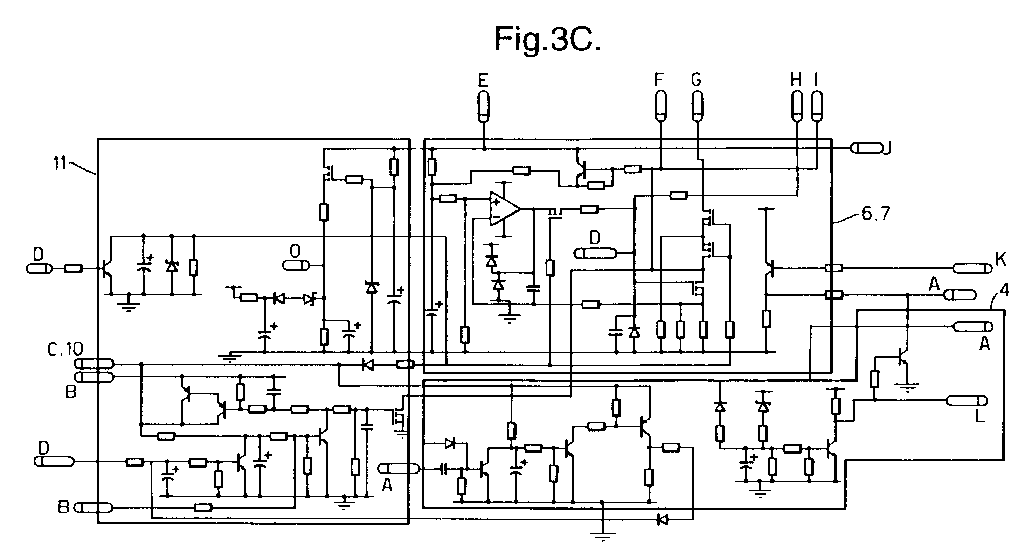

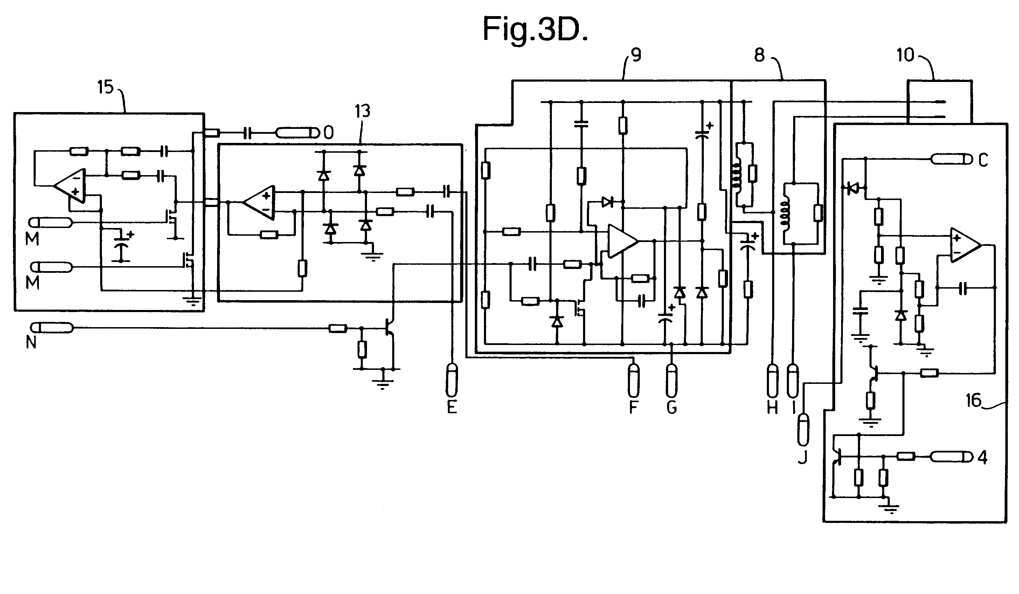

It will be appreciated that, whilst most modern telephones are of the digital tone dial type, there are still a large number of older phones in use which employ pulse dialling. The circuit of figures 3A to 3D enables the microprocessor 4 to read both type of dialling signals from the telephone unit 1 and amend the dialling signal accordingly.

In figures 3A to 3D, the functional equivalents of the components shown in figure 2 are identically numbered. In this example, a memory 13 is provided external to the microprocessor 4. Also provided is external dialling signal detection circuitry 14,15, and a dialling signal generator 15 controlled by the microprocessor 4 for outputting dialling signals generated by the microprocessor 4 in accordance with data stored in the memory 13.

## Claims

1. A telephone dialling monitoring and route selecting apparatus (2) comprising:
a first connector (3) for connecting the apparatus, in use, to a telephone line;
a second connector (16) for connecting the apparatus, in use, to a telephone unit (1);
telephone dialling monitoring means (4) connected to both the first and second connectors, for monitoring dialling signals from the telephone unit, and outputting signals to the telephone line in accordance with the monitored dialling signal and data stored in the monitoring means; and characterised by:
means (6,7,C1 to C3, R1 to R5) for separating AC and DC signals provided via the telephone line and directing the AC signal to the telephone until the presence of a digit being dialled is detected by the telephone dialling monitoring means (4) and a portion of the DC signal to the telephone unit and a further portion of the DC signal to the monitoring means in order to power the apparatus.

2. An apparatus (2) according to claim 1, further comprising a current sensing relay (8) provided between the second connector (2) and the monitoring means (4), the relay operating to connect the telephone unit (1) directly to the telephone line, bypassing the monitoring means, when the telephone unit receiver is on-hook, so that incoming telephone calls are directed directly to the telephone unit, and operating to connect the telephone unit to the monitoring means when the telephone unit is taken off-hook by a user.

3. An apparatus (2) according to claim 1, further comprising rectifying means connected between the first connector (3) and the monitoring means (2).

4. An apparatus according to any of claims 1 to 3, wherein the telephone dialling monitoring means (4) comprises a microprocessor (4).

5. An apparatus (2) according to any of claims 1 to 4, wherein the signal separating means (6,7,C1 to C3,R1 to R5) comprises:
at least one operational amplifier (6); at least one transistor (7); at least one capacitor (C1 to C3); and resistors (R1 to R5), arranged to, in use, present a high AC impedance and low DC impedance to a telephone line to which it is connected.

6. An apparatus (2) according to any of the preceding claims, adapted for use with a tone dialling telephone unit (1).

7. An apparatus (2) according to any of claims 1 to 5, adapted for use with a pulse dialling telephone unit (1).

8. An apparatus (2) according to any of claims 1 to 5, adapted for use with both pulse and tone dialling telephone units (1).

9. An apparatus (2) according to claim 7 or claim 8, further comprising line voltage or current maintaining means for maintaining the line voltage or current during dialling operation of a pulse dial telephone.

10. An apparatus (2) according to any of the preceding claims, wherein there is further provided means (17) for enabling the apparatus to operate with either 2 or 3 wire telephone apparatus.

11. An apparatus (2) according to any of the preceding claims, wherein there is further provided means (9,R2) selectively provide a dialling tone to the telephone unit (1).

## Patentansprüche

1. Telefonwahlüberwachungs- und Routenauswahlvorrichtung (2) mit:
einem ersten Verbinder (3) zum Verbinden der Vorrichtung, bei Gebrauch, mit einer Telefonleitung;
einem zweiten Verbinder (16) zum Verbinden der Vorrichtung, bei Gebrauch, mit einer Telefoneinheit (1);
einer sowohl mit dem ersten als auch dem zweiten Verbinder verbundenen Telefonwahlüberwachungseinrichtung (4) zum Überwachen von Wählsignalen von der Telefoneinheit, und zum Ausgeben von Signalen an die Telefonleitung gemäß dem überwachten Wählsignal und gemäß von in den Überwachungsmitteln gespeicherten Daten;
gekennzeichnet durch:
eine Einrichtung (6, 7, C1 bis C3, R1 bis R5) zum Trennen der über die Telefonleitung bereitgestellten Wechselstrom- und Gleichstrom-Signale und zum Weiterleiten des Wechselstrom-Signals an das Telefon, bis das Vorliegen einer gewählten Zahl von den Telefonwahlüberwachungsmitteln (4) erfaßt wird, und eines Teils des Gleichstrom-Signals an die Telefoneinheit und eines weiteren Teils des Gleichstrom-Signals an die Überwachungseinrichtung, um die Vorrichtung mit Energie zu versorgen.

2. Vorrichtung (2) nach Anspruch 1, die ferner ein zwischen dem zweiten Verbinder (2) und der Überwachungseinrichtung (4) vorgesehenes stromempfindliches Relais (8) aufweist, wobei das Relais so funktioniert, daß es die Telefoneinheit (1) direkt mit der Telefonleitung verbindet, die Überwachungseinrichtung umgeht, falls der Hörer aufgelegt wird, so daß eingehende Telefonanrufe direkt an die Telefoneinheit geleitet werden, und so funktioniert, daß es die Telefoneinheit mit der Überwachungseinrichtung verbindet, falls die Telefoneinheit von einem Benutzer abgehoben wird.

3. Vorrichtung (2) nach Anspruch 1, die ferner Gleichrichtermittel aufweist, die zwischen dem ersten Verbinder (3) und der Überwachungseinrichtung (2) verbunden sind.

4. Vorrichtung nach einem der Ansprüche 1 bis 3, bei welcher die Telefonwahlüberwachungseinrichtung (4) einen Mikroprozessor (4) aufweist.

5. Vorrichtung (2) nach einem der Ansprüche 1 bis 4, bei welcher die Signaltrenneinrichtung (6, 7, C1 bis C3, R1 bis R5) aufweist:
wenigstens einen Operationsverstärker (6);
wenigstens einen Transistor (7) ;
wenigstens einen Kondensator (C1 bis C3); und
Widerstände (R1 bis R5), die so angeordnet sind,
daß sie bei Gebrauch eine hohe Wechselstrom-Impedanz und eine niedrige Gleichstrom-Impedanz zu einer Telefonleitung aufweisen, mit der sie verbunden ist.

6. Vorrichtung (2) nach einem der vorhergehenden Ansprüche, die zur Verwendung mit einer Tonwahl-Telefoneinheit (1) ausgelegt ist.

7. Vorrichtung (2) nach einem der Ansprüche 1 bis 5, die zur Verwendung mit einer Pulswahl-Telefoneinheit (1) ausgelegt ist.

8. Vorrichtung (2) nach einem der Ansprüche 1 bis 5, die zur Verwendung sowohl mit einer Pulswahl- als auch einer Tonwahl-Telefoneinheit (1) ausgelegt ist.

9. Vorrichtung (2) nach Anspruch 7 oder 8, die ferner Leitungsspannungs- oder Leitungsstromaufrechterhaltungsmittel zum Aufrechterhalten der Leitungsspannung oder des Leitungsstromes während des Wählvorganges eines Pulswahltelefons aufweist.

10. Vorrichtung (2) nach einem der vorhergehenden Ansprüche, bei welcher ferner Mittel (17) vorgesehen sind, die der Vorrichtung ermöglichen, entweder mit einer Zweileiteroder einer Dreileiter-Telefonvorrichtung zu arbeiten.

11. Vorrichtung (2) nach einem der vorhergehenden Ansprüche, bei welcher ferner Mittel (9, R2) vorgesehen sind, die der Telefoneinheit (2) selektiv einen Wählton bereitstellen.

## Revendications

1. Appareil de contrôle de composition de numéros et de sélection d'acheminement pour téléphone (2) comprenant :
un premier connecteur (3) pour connecter l'appareil, en utilisation, à une ligne téléphonique ;
un second connecteur (16) pour connecter l'appareil, en utilisation, à un poste téléphonique (1) ;
un moyen de contrôle de numérotation téléphonique (4) connecté aux premier et second connecteurs pour surveiller des signaux de numérotation en provenance du poste téléphonique et fournir des signaux à la ligne téléphonique en accord avec le signal de numérotation contrôlé et des données Mémorisées dans le moyen de contrôle ; et caractérisé par :
des moyens (6, 7, C1-C3, R1-R5) pour séparer les signaux alternatif et continu fournis par la ligne téléphonique et pour diriger le signal alternatif vers le téléphone jusqu'à ce que la présence d'un chiffre numéroté soit détectée par le moyen de contrôle de numérotation téléphonique (4), et une partie du signal continu au poste téléphonique et une autre partie du signal continu au moyen de contrôle pour alimenter l'appareil.

2. Appareil (2) selon la revendication 1, comprenant en outre un relais de détection de courant (8) prévu entre le second connecteur (2) et le moyen de contrôle (4), le relais agissant pour connecter le poste téléphonique (1) directement à la ligne téléphonique, en dérivation par rapport au moyen de surveillance, quand le récepteur du poste téléphonique est raccroché, de sorte que des appels téléphoniques incidents sont dirigés directement vers le poste téléphonique, et agissant pour connecter le poste téléphonique au moyen de contrôle quand le poste téléphonique est décroché par un utilisateur.

3. Appareil (2) selon la revendication 1, comprenant en outre un moyen de redressement connecté entre le premier connecteur (3) et le moyen de surveillance (2).

4. Appareil selon l'une quelconque des revendications 1 à 3, dans lequel le moyen de contrôle de numérotation téléphonique (4) comprend un microprocesseur (4).

5. Appareil (2) selon l'une quelconque des revendications 1 à 4, dans lequel le moyen de séparation de signal (6, 7, C1-C3, R1-R5) comprend au moins un amplificateur opérationnel (6) ; au moins un transistor (7) ; au moins un condensateur (C1-C3) ; et des résistances (R1-R5) disposés pour, en utilisation, présenter une forte impédance en alternatif et une faible impédance en continu pour une ligne téléphonique à laquelle l'appareil est connecté.

6. Appareil (2) selon l'une quelconque des revendications précédentes, adapté à être utilisé avec un poste téléphonique à numérotation par tonalités (1).

7. Appareil (2) selon l'une quelconque des revendications 1 à 5, adapté à être utilisé avec un poste téléphonique à numérotation par impulsions (1).

8. Appareil (2) selon l'une quelconque des revendications 1 à 5, adapté à être utilisé pour des postes téléphonique à numérotation par impulsions et par tonalités.

9. Appareil (2) selon la revendication 7 ou 8, comprenant un moyen de maintien de tension ou de courant de ligne pour maintenir la tension ou le courant de ligne pendant l'opération de numérotation d'un poste téléphonique à numérotation par impulsions.

10. Appareil (2) selon l'une quelconque des revendications précédentes, dans lequel il est en outre prévu des moyens (17) pour permettre à l'appareil de fonctionner avec un appareil téléphonique à deux ou trois fils.

11. Appareil (2) selon l'une quelconque des revendications précédentes, dans lequel il est en outre prévu des moyens (9, R2) pour fournir sélectivement une tonalité de numérotation au poste téléphonique (1).
